# EUROPEAN PATENT SPECIFICATION

(11) **EP 0 843 829 B1**
(45) Date of publication and mention of the grant of the patent: **24.10.2001**
(21) Application number: 96927226.9
(22) Date of filing: 07.08.1996
(51) Int. Cl.: G01S 17/08, G01S 7/487

(54) **A METHOD FOR THE MEASUREMENT OF RELATIVELY SMALL WATER DEPTHS, ESPECIALLY IN THE VICINITY OF SEA COASTS AND LAKE SHORES**
VERFAHREN ZUM MESSEN DER WASSERTIEFE IN RELATIV UNTIEFEN GEWÄSSERN, INSBESONDEREIN DER NÄHE DER KÜSTE UND VON UFERN.
PROCEDE SERVANT A MESURER DES PROFONDEURS D'EAU RELATIVEMENT LIMITEES PARTICULIEREMENT AU VOISINAGE DU LITTORAL ET DE BORDS DE LACS

(30) Priority: 09.08.1995 SE 9502806
(43) Date of publication of application: 27.05.1998
(73) Proprietor: Saab Dynamics Aktiebolag, 581 88 Linköping (SE)
(72) Inventor: JOHANSSON, Kenneth, S-554 63 Jönköping (SE)
(86) International application number: SE9600994
(87) International publication number: WO9706450

(56) References cited:
- DE-A- 2 244 997
- US-A- 4 277 167
- PATENT ABSTRACTS OF JAPAN, Vol. 4, No. 131, P-27; & JP,A,55 082 068 (NIPPON DENKI), 29 June 1980.

## Description

The present invention relates to a method of measuring a relatively small distance between a water surface and a bottom located beneath, i.e. the water depth, comprising that a measuring equipment, provided with a transmitter and a receiver for laser light, preferably having a wavelength λ of about 0.5 *µ*m, is made to issue, above the water surface, short pulses in a direction having a relatively small angle α to the perpendicular of said water surface and to receive a first reflection from the water surface and a second reflection from the bottom, after which the measuring equipment calculates, by signal processing the signals corresponding to the reflections, said distance, preferably comprising a correction for the height of waves on the water surface.

Such methods are known and are commonly carried out by having the measuring equipment transported by aircraft, usually a helicopter at a height of some hundred meters. The position of the aircraft is usually determined by means of the GPS and in combination with an inertia platform data are obtained that are combined with said determination of the distance, i.e. the water depth, so that the water depth for the respective coordinates is obtained. The transmitter is usually made to scan according to a predetermined pattern so that the map determination is made rapidly and efficiently. Presupposing the water depth not to be too small, methods of this kind work well. Since the issued pulses usually have a length of some nanoseconds, it means, that in such cases where the propagation time interval of light travelling from the water surface and back thereto is of the same order of magnitude as the pulse length, problems arise in determining the water depth.

The object of the present invention is thus to provide a method of the kind mentioned in the introduction, so that also small distances, i.e. water depths, can be determined with a good precision.

According to the invention such a method is characterized by making the signal processing in such a way, that the function signal amplitude/time is scanned and that a first increasing function portion is approximated by a substantially straight first line, after which the function is further scanned through a minimum of its first derivative (point of inflection) up to a second increasing function portion located before a maximum, which is approximated by a substantially straight second line, whereafter the time interval between the lines, that has a relation to said distance, is used for determining it.

In an advantageous embodiment of the method the time interval between the lines is used at half the maximum signal amplitude height in excess of the noise level for determining said distance.

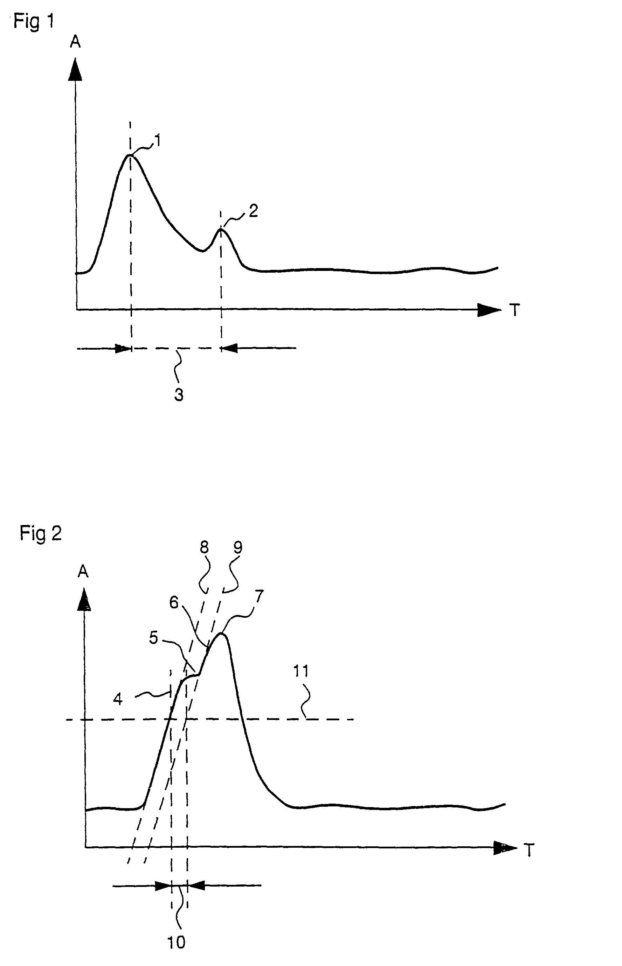

The invention will be described in greater detail with reference to the accompanying drawings in which Fig. 1 shows a diagram of signal amplitude/time as measured above a water surface having a relatively large water depth, and Fig. 2 shows the corresponding diagram as measured above a water surface having a relatively little water depth.

The figures 1 and 2 thus both show diagrams of the signal amplitude as functions of time.

In Fig. 1 a first amplitude maximum is referenced by 1, corresponding to a reflection against a water surface. The reflection against the bottom, which in this case is located at a relatively large water depth, is distinguished by a second amplitude maximum referenced 2. In this case the two maximum points are distinct and the time interval therebetween, denoted by 3, can be measured with a good precision and is equal to the time interval/2 x the velocity c/n of light in water, where c is equal to the light velocity in air and n equals the refractive index of water relatively to that of air.

A second measurement situation is illustrated in Fig. 2. Here the water depth is small. The function signal amplitude/time here has a first increasing function portion 4, which continues into an inflection point 5 (i.e. a minimum of the first derivative), after that a second increasing function portion 6, followed by a maximum 2 of the function. The first function portion 4 is approximated by a substantially straight first line 8 and the second function portion 6 is approximated by a second, substantially straight line 9. The time interval 10 between these lines is measured, in this case at half the maximum amplitude height 11 in excess of the noise level, and the distance between the water surface and the bottom, i.e. the water depth, is determined in the way indicated above.

In order to make the method work, some criteria must be fulfilled. It must be ascertained that the measurement is actually made over water, what can be made by means of a IR-measurement, that differentiates between ground and water. Further, the function signal amplitude/time must have such a shape that has been described. In other cases measurement is made according to Fig. 1.

## Claims

1. A method of measuring a relatively small distance between a water surface and a bottom located beneath, i.e. the water depth, comprising that a measuring equipment, provided with a transmitter and a receiver of laser light, preferably having a wavelength λ of about 0.5 *µ*m, is made to issue, above the water surface, short pulses in a direction having a relatively small angle α to the perpendicular of said water surface and to receive a first reflection from the water surface and a second reflection from the bottom, whereafter the measuring equipment by means of signal processing of the signals corresponding to the reflections calculates said distance, preferably including a correction for the height of waves on the water surface,
**characterized in**
**that** the signal processing is made in such a way that the function signal-amplitude/time is scanned and a first increasing portion of the function is approximated by a substantially straight first line, after which the function is further scanned to pass through a minimum of its first derivative (point of inflection) to a second increasing portion of the function before a maximum, which is approximated by a substantially straight second line, whereafter the time interval between the lines that is related to said distance is used for determining it.

2. A method according to claim 1,
**characterized in**
**that** the time interval between the lines at half the maximum signal amplitude height above the noise level is used for determining said distance.

## Patentansprüche

1. Messverfahren für einen verhältnismässig geringen Abstand zwischen einer Wasseroberfläche und einem darunterliegenden Boden, d.h. die Wassertiefe, mit einer Messvorrichtung, die mit einem Sender und einem Empfänger für Laserstrahlen mit einer Wellenlänge λ von ungefähr 0,5 µm versehen ist, oberhalb der Wasseroberfläche kurze Impulse in einer Richtung mit geringem Winkel α zu einer Lotrichtung dieser Wasseroberfläche auszusenden und eine erste Spiegelung von der Wasseroberfläche und eine zweite Spegelung vom Boden entgegen zu nehmen, worauf die Messvorrichtung mit Hilfe einer Signalbearbeitung die den Spiegelungen entsprechenden Signale berechnet, wobei der Abstand vorteilhafterweise eine Korrektur der Wellengrösse umfasst, **dadurch gekennzeichnet, dass** die Signalbearbeitung auf solche Weise vorgenommen wird, dass die Funktion der Signalamplitude pro Zeiteinheit abgelesen wird und ein erster ansteigender Bereich der Funktion mit einer im wesentlichen geraden Linie angenähert wird, worauf die Funktion weiter abgelesen wird durch einen Kleinstwert von deren erster Derivate (Wendepunkt) bis auf einen zweiten ansteigenden, vor dem Grösstwert liegenden Bereich, der durch eine im wesentlichen zweite gerade Linie angenähert ist, worauf der Zeitabschnitt zwischen den Linien in einem Verhältnis zu diesem Abstand zu deren Bestimmung verwendet wird.

2. Verfahren gemäss Patentanspruch1, **dadurch gekennzeichnet, dass** der Zeitabschnitt zwischen den Linien bei halber grösstmöglicher Amplitudengrösse oberhalb des Störpegels zur Bestimmung dieses Abstandes verwendet wird.

## Revendications

1. Procédé de mesure d'une distance relativement faible entre une surface de plan d'eau et un fond situé au-dessous, c'est à dire, la profondeur d'eau, comprenant l'émission, par un équipement de mesure comportant un émetteur et un récepteur de lumière laser présentant, de préférence, une longueur d'onde γ de 0,5 µm environ, au-dessus de la surface de l'eau, de courtes impulsions suivant une direction présentant un angle α relativement faible par rapport à la perpendiculaire à ladite surface de l'eau, et la réception d'une première réflexion à partir de la surface de l'eau et d'une seconde réflexion à partir du fond, après quoi l'équipement de mesure, au moyen d'un traitement de signal des signaux correspondants aux réflexions, calcule ladite distance, comprenant, de préférence, une correction en fonction de la hauteur des vagues à la surface de l'eau,
**caractérisé en ce que** le traitement de signal est réalisé d'une telle manière que la fonction d'amplitude de signal par rapport au temps est scrutée et une première partie croissante de la fonction est corrélée avec une première ligne sensiblement droite, après quoi la fonction est encore scrutée afin de passer par un minimum de sa dérivée première (point d'inflexion) vers une seconde partie croissante de la fonction, avant un maximum, qui est corrélée avec une seconde ligne sensiblement droite, après quoi l'intervalle de temps entre les lignes, qui est fonction de ladite distance, est utilisé pour déterminer cette dernière.

2. Procédé selon la revendication 1, **caractérisé en ce que** l'intervalle de temps entre les lignes à la moitié de la hauteur au-dessus du niveau de bruit de l'amplitude maximum de signal est utilisé pour déterminer ladite distance.
